# EUROPEAN PATENT SPECIFICATION

(11) **EP 0 278 123 B1**
(45) Date of publication and mention of the grant of the patent: **21.07.1993**
(21) Application number: 87202272.8
(22) Date of filing: 07.05.1984
(51) Int. Cl.: G02B 6/28

(54) **Fiber optic structure**
Faseroptisches Bauelement
Elément à fibre optique

(30) Priority: 20.01.1984 US 572734
(43) Date of publication of application: 17.08.1988
(62) Divisional of application: 84902153.0
(73) Proprietor: Hughes Aircraft Company, Los Angeles, California 90045-0066 (US)
(72) Inventor: Pikulski, Joseph L., Newberry Park California 91320 (US)
(74) Representative: Colgan, Stephen James

(56) References cited:
- EP-A- 0 021 871
- EP-A- 0 038 023
- WO-A-82/01365
- DE-A- 3 036 868

## Description

### BACKGROUND OF THE INVENTION

Optical fiber has electro-deposited thereon a metal body which permits the fiber to be mechanically acted upon by machining, positioning, or handling the metal body.

Fiber optic waveguides are small and fragile. It is important that the waveguides be firmly supported at least at their ends so that they can be ground and polished with facets or other surfaces which are optimum for coupling light into the fiber or for coupling the fiber with respect to another optical structure such as another optical fiber, a detector, or an integrated optic waveguide. In the past, epoxy adhesive has been employed for attaching a fiber optic waveguide to a surface for the purpose of building a coupling device for the end of the fiber, including polishing of the fiber end. One of the problems of this attachment is that the dimensional changes in the hardening epoxy adhesive cause external forces on the fiber optic waveguide. These forces cause microbending in the optical fiber resulting in significant signal losses. Microbending, localized changes in the optical fiber's index of refraction, must be minimized in order to maximize the signal and the signal-to-noise ratio.

DE-A-3036868 describes a four-port fibre optic coupler using the above cementing techniques. Each fibre is cemented in position in a curved convex-shaped groove in a respective metal body. The bodies are ground and polished until the optical fibres are exposed, and the bodies secured face-to-face to form the four-port coupling.

### SUMMARY OF THE INVENTION

The present invention has been devised with the aim of providing a four-port coupling which does not suffer from microbending and consequent microbending losses, upon temperature change.

The invention provides first and second optical fibres, each of said fibres having ends; first and second plated up metallic bodies on said first and second optical fibres, respectively, intermediate said ends of said fibres, each said metallic body constraining said respective optical fibre to a curved configuration therein; and said first and second metallic bodies each having a face thereon, said optical fibres being exposed at said faces so that when said faces are placed together with said exposed fibres in alignment, a four-port coupling is formed.

With this invention the plated body applies uniform pressure over the fibre to minimise microbending, even during temperature changes.

Each plated body may comprise electro-deposited copper.

The structure may further comprise first and second substrates each having a groove in a face thereof, said groove having a convex radius of curvature, said first and second optical fibres being constrained within respective grooves by said respective metallic bodies.

### BRIEF DESCRIPTION OF THE DRAWINGS

FIG. 1 is a perspective view of an optical fiber onto which a metallic body will be built up in accordance with the structure and method of this invention.

FIG. 2 is a perspective view of the same optical fiber of FIG. 1, showing a metal body built up thereon.

FIG. 3 is a perspective of two of the fibers of FIG. 2 with their bodies machined and lying against a fixture for endwise coupling of the optical fibers.

FIG. 4 is an isometric view of the first assembly of a fiber optic with respect to a base to produce a four port coupler.

FIG. 5a is a view of the structure of FIG. 4, after the deposition of a metal body to hold the fiber optic in place with respect to the base.

FIG. 5b is an enlarged plan view, with ports broken away, showing the port in the fiber optic.

FIG. 5c is an isometric view of the assembled four port coupler.

### DETAILED DESCRIPTION OF THE INVENTION

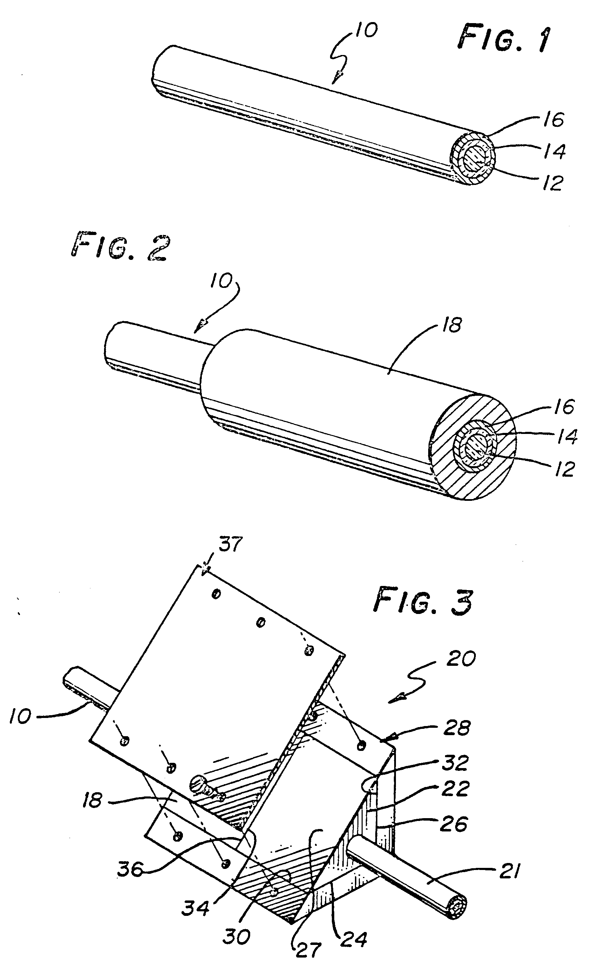

In FIG. 1, optical fiber 10 is the general indication of a typical coated optical fiber. Fiber core 12 is substantially transparent to the optical radiation of interest. It preferably carries an optical cladding 14 and a coating 16. Coating 16 can be either an organic material or an inorganic material such as aluminum. Such optical fibers can be made sufficiently flexible and optically transmissive to achieve the results required of optical fibers.

Referring to FIG. 2, copper body 18 is a built-up structure on coating 16 of fiber 10 when cladding is of an inorganic material such as aluminum. Alternatively, copper body 18 is a built-up structure on optical cladding 14 when coating 16 is of an organic material, coating 16 being removed therefrom prior to beginning of the build-up process.
When the optical cladding 14 is the exterior or material of the fiber, the length on which the body 18 is to be deposited can be made conductive by vapor deposition of silver or gold as a first step. Copper is particularly suited for the built-up structural body because it can be evenly and easily deposited upon the fiber. An even, localized-force-free deposition process eliminates localized forces which can cause microbending and consequent transmission losses. Other metals would be selected for the built-up structural body when found to be suitable for this even, localized-force-free deposition.

Copper body 18 is built up by electroplating. A suitable electroplating bath is prepared as follows: Two hundred twenty-five grams of copper sulphate are dissolved per liter of water. Fifty-five grams of sulfuric acid are also added per liter to provide the plating. A suitable electroplating bath is prepared. Two hundred twenty-five grams of copper sulphate are employed per liter of water. Fifty-five grams of sulfuric acid are also added per liter to provide the copper plating electrolyte. Added to the plating electrolyte solution is one-half milliliter of UBAC solution No. 1 per liter of electrolyte. This material is available from Udylite-Omic, 21441 Hoover Road, Warren, Michigan 48089. This mixture acts to improve the fineness of the copper grain in the electrolytic build up. In the alternative, blackstrap molasses is also useful for the purpose of improving the fineness of the copper grain.

It is critical to the plating that the plating current be a maximum of 180 milliamperes per square inch (279A/m²). A higher current accelerates the ions in the plating solution and this, in turn, produces random orientation which results in graininess. Currents lower than the maximum current improve the fineness of the copper grain. The preferred current is 90 milliamperes per square inch (140A/m²). The plating voltage is from 0 to 3 volts, and the electrolyte temperature is maintained at 70 to 80 degrees F (21.1 to 25.7°C). The concentration of UBAC solution No. 1 in the electrolyte is maintained during the plating operation.

The plating operation must be carefully performed to minimize stresses in the copper plate body which would cause microbending. Microbending, localized changes in the optical fiber's index of refracting, is caused by forces applied to fiber 10. Copper body 18 is thereby deposited without substantial effect upon fiber 10. The result is that the copper body 18 produces a transmission loss of less than 0.01 decibels in the fiber. Plating continues until the copper body 18 is built up to the desired size.

The built-up structural body is useful for creating structures of various utility and for use of the fiber 10 in various different applications. FIG. 3 illustrates coupler 20 wherein fiber 10 has its body 18 and another fiber 21 has its body 22 built up in the same manner. The bodies 18 and 22 can be plated against fixture 28 at the same time to maintain fiber alignment. Bodies 18 and 22 have faces 24 and 26 which are substantially planar and lie at right angles to each other. Fixture 28 has corresponding surfaces 30 and 32 also lying at right angles to each other to define the built-up bodies. Fibers 10 and 21 respectively extend to the joining faces 34 and 36 where they are ground and polished for optical coupling. The cover side 27 of bodies 18 and 22 are machined to permit cover plate contact. When bodies 18 and 22 are positioned against the fixture with their adjoining faces 34 and 36 in contact, then the two fibers 10 and 21 are in end-to-end optical coupling. Cover plate 37 holds them in place. Since optical fibers 10 and 21 are a fixed distance from the reference faces which adjoin the fixture, the coupling may be disassembled and reassembled with proper coupling.

Coupler 20 is useful over a range of temperatures and especially at high temperatures because the two bodies 18 and 22 have special features. When the bodies are made of copper, both have the same coefficient of expansion. Therefore, upon temperature change, optical fibers 10 and 21 remain in alignment. In addition, the deposition of copper is so uniform that over a change in temperature there is not an uneven application of pressure to the fibers 10 and 21 embedded therein. Such uneven expansion would cause uneven forces on the fiber which cause microbending and consequent losses.

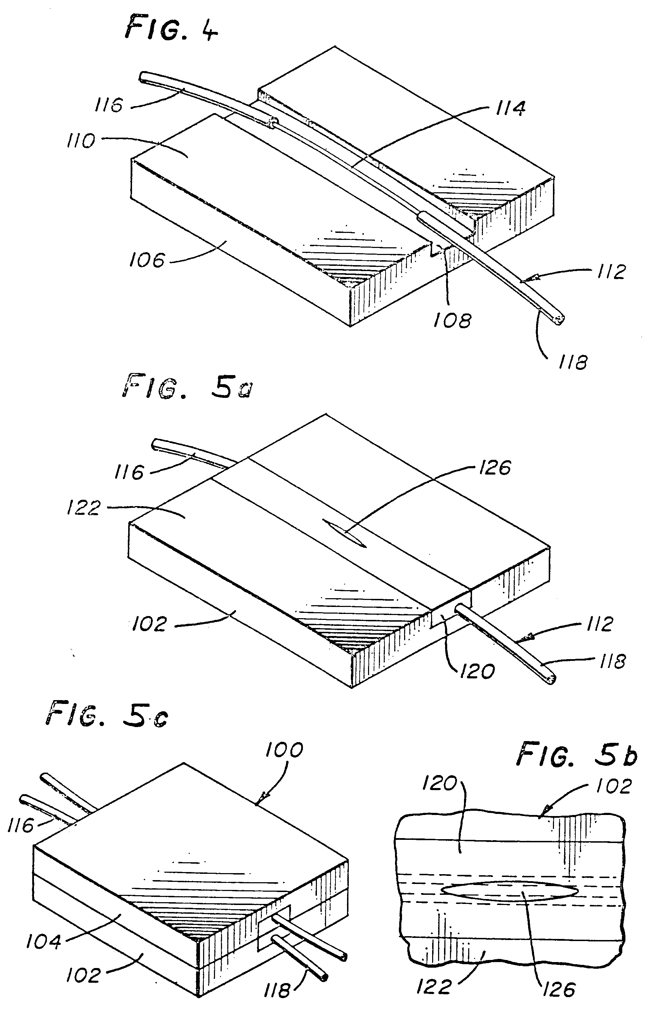

FIG. 5c shows rigid four port fiber optic directional coupler 100. It is constructed of coupler halves 102 and 104. The completed coupler half 102 is shown in FIGS. 5a and 5b, while an intermediate stage of the construction is shown in FIG. 4. In FIG. 4, substrate 106 has a cut groove 108 below face 110 thereof. Groove 108 has a gentle radius of curvature, convex toward the top, as seen in FIG. 4. Optical fiber 112 is laid lengthwise in groove 108. When optical fiber 112 has an organic or otherwise non-electrically conductive coating on its cladding, the coating is stripped, thereby exposing the cladding. Stripped section 114, wherein the cladding is exposed, is illustrated in FIG. 4. However, when optical fiber 112 is coated with aluminum, such coating may be left on or may be removed. In FIG. 4, the stripped section 114 lies against the highest port of the curved surface of groove 108, and ends 116 and 118 extend away from face 110 of substrate 106 for connection purposes. While stripped section 114 and the rest of optical fiber 112 are held in place, groove 108 is filled by plating, in the manner described with respect to FIG. 2. Plated body 120 therefore fills groove 108, as is indicated in FIG. 5a. The top of the combined structure of substrate 106, optical fiber 112, and body 120 is ground and polished on top face 122. The grinding and polishing process continues until the core in single-mode optical fibers is totally exposed. In multi-mode optical fibers, the grinding and polishing may be done to either partially or totally expose the core. As is seen in FIG. 5b, ground and polished face 122 nearly exposes core 124 in this single-mode case and exposes cladding 126. This completes coupler half 102 of which coupler half 104 is identical.

When the two coupler halves 102 and 104 are placed together in face-to-face relationship with the core and cladding of their respective optical fibers adjoining, they form a stable four port directional coupler as illustrated in FIG. 5c. Directional coupler 100 has greater durability, stability, and provides less change over temperature fluctuations than previously constructed couplers. The reason for this is that the plated body applies uniform pressure over the fiber to minimize microbending, even during temperature changes. The embodiment of a substantial length of the optical fiber 112 into body 120 also provides strain relief to the fiber. This serves to minimize stresses at the active area which is exposed by polishing.

This invention has been described in its presently contemplated best mode, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A fiber optic structure comprising: first and second optical fibres (112), each of said fibres having ends (116, 118); first and second plated up metallic bodies (120) on said first and second optical fibres (112), respectively, intermediate said ends (116, 118) of said fibres, each said metallic body (120) constraining said respective optical fibre (112) to a curved configuration therein; and said first and second metallic bodies (120) each having a face (122) thereon, said optical fibres (112) being exposed at said faces (122) so that when said faces (122) are placed together with said exposed fibres in alignment, a four-port coupling is formed.

2. A fibre optic structure according to claim 1 wherein each said metallic body (120) is electro-deposited copper.

3. A fibre optic structure according to claim 1 or 2, further comprising first and second substrates (106) each having a groove (108) in a face (110) thereof, said groove (108) having a convex radius of curvature said first and second optical fibres (112) being constrained within respective grooves (108) by said respective metallic bodies (120).

## Patentansprüche

1. Eine optische Faserstruktur mit:
ersten und zweiten optischen Fasern (112), wobei jede der Fasern Enden (116, 118) aufweist; ersten und zweiten metallischen Körpern (120), die jeweils auf den ersten und zweiten optischen Fasern (112) aufgeschichtet worden sind, und zwar zwischen den Enden (116, 118) der Faser, wobei jeder der metallischen Körper (120) die jeweilige optische Faser (112) in eine gekrümmte Konfiguration in sich zwingt; und worin der erste und der zweite metallische Körper (120) jeweils auf sich eine Oberfläche (122) aufweist, wobei die optischen Fasern (112) bei diesen Oberflächen (122) freiliegen, so daß wenn die Oberflächen (122) zusammen mit den freiliegenden Fasern in einer Ausrichtung angeordnet werden, eine Kopplung mit vier Toren gebildet wird.

2. Eine optische Faserstruktur nach Anspruch 1, in der jeder der metallischen Körper (120) galvanisch abgeschiedenes Kupfer ist.

3. Eine optische Faserstruktur nach Anspruch 1 oder 2, die weiter erste und zweite Substrate (106) umfaßt, die jeweils einen Spalt (108) in einer ihrer Oberflächen (110) aufweisen, wobei der Spalt (108) einen konvexen Krümmungsradius aufweist und die erste und die zweite optische Faser (112) in eine jeweilige Spalte (108) durch den jeweiligen metallischen Körper (120) gezwängt wird.

## Revendications

1. Structure à fibres optiques comportant : des première et seconde fibres optiques (112), chacune desdites fibres ayant des extrémités (116, 118) ; des premier et second corps métalliques déposés (120) sur lesdites première et seconde fibres optiques (112), respectivement, entre lesdites extrémités (116, 118) desdites fibres, chacun desdits corps métalliques (120) bridant ladite fibre optique respective (112) à une configuration incurvée dans le corps ; et lesdits premier et second corps métalliques (120) portant chacun une face (122), lesdites fibres optiques (112) étant à découvert auxdites faces (122) de manière que, lorsque lesdites faces (122) sont appliquées l'une contre l'autre avec lesdites fibres à découvert en alignement, un couplage à quatre accès soit formé.

2. Structure à fibres optiques selon la revendication 1, dans laquelle chacun desdits corps métalliques (120) est en cuivre électro-déposé.

3. Structure à fibres optiques selon la revendication 1 ou 2, comportant en outre des premier et second substrats (106) ayant chacun une gorge (108) dans une face (110) de ce substrat, ladite gorge (108) ayant un rayon de courbure convexe, lesdites première et seconde fibres optiques (112) étant bridées à l'intérieur de gorges respectives (108) par lesdits corps métalliques respectifs (120).
